# EUROPÄISCHE PATENTSCHRIFT

(11) **EP 3 222 473 B1**
(45) Veröffentlichungstag und Bekanntmachung des Hinweises auf die Patenterteilung: **08.05.2019**
(21) Anmeldenummer: 17170535.3
(22) Anmeldetag: 28.06.2013
(51) Int. Cl.: B60R 19/18, B62D 27/02, B60R 19/24

(54) **AUSSENVERKLEIDUNGSBAUTEIL EINES KRAFTFAHRZEUGS**
OUTER PANEL COMPONENT OF A MOTOR VEHICLE
COMPOSANT D'HABILLAGE EXTÉRIEUR DE VÉHICULE AUTOMOBILE

(30) Priorität: 06.03.2013 DE 202013100971 U
(43) Veröffentlichungstag der Anmeldung: 27.09.2017
(62) Teilanmeldung aus: 13735240.7
(73) Patentinhaber: SMP Deutschland GmbH, 79268 Bötzingen (DE)
(72) Erfinder: Rieser, Wolfgang, 79261 Gutach (DE)
(74) Vertreter: Westphal, Mussgnug & Partner Patentanwälte mbB

(56) Entgegenhaltungen:
- EP-B1- 0 417 654
- DE-A1- 19 736 755

## Beschreibung

Die Erfindung betrifft ein Außenverkleidungsbauteil eines Kraftfahrzeugs mit den oberbegrifflichen Merkmalen des Patentanspruchs 1, wie beispielsweise aus EP 0 417 654 B1 bekannt.

Insbesondere bei einer Anbindung solcher Außenverkleidungsbauteile aus Kunststoff an ein Blech ist immer Korrosion in einem Kontaktbereich der verschiedenen Materialien festzustellen. Diesem Problem widmet sich die EP 0 417 654 B1. Die Anbindung erfolgt zwischen einer nach innen abgewinkelten Absatzfläche der Karosserie und einem nach innen von einem Stoßfänger abstehenden Schenkel mit einer streifenförmigen Verlängerung. Die streifenförmige Verlängerung wird in einer zusätzlichen Führungsschiene aufgenommen, welche vorangehend an der Karosserie zu befestigen ist.

EP0417654 B1 offenbart ein Außenverkleidungsbauteil eines Kraftfahrzeugs gemäß dem Oberbegriff des Anspruchs 1.

Die DE 10 2009 010 193 schlägt einen L-Schenkel vor, der als separates Element und Zwischenstück angeordnet wird.

Es ist demnach bekannt, dass die Absatzfläche und eine der Absatzfläche zugewandte Nachbarfläche des Schenkels in einem, aus Sicht auf einen Schnitt durch das Kraftfahrzeug, von außen nach innen reichenden, ersten Bereich nahezu parallel zueinander verlaufen.

Aufgabe der Erfindung ist es, ein Außenverkleidungsbauteil zu schaffen, welches sich einfach an eine Karosserie anbinden lässt, möglichst ohne Korrosionsprobleme zu verursachen.

Das Problem wird erfindungsgemäß gelöst durch ein Außenverkleidungsbauteil eines Kraftfahrzeugs umfassend die Merkmale des kennzeichnenden Teils des Anspruchs 1.

Vorteilhafte Ausführungsformen sind in den Unteransprüchen angegeben.

Gemäß der Erfindung ist von außen bis zumindest zum inneren Ende des ersten Bereichs die Nachbarfläche frei von Graten oder sonstigen, insbesondere scharfkantigen, Erhebungen ausgeführt, die beispielsweise durch eine Werkzeugtrennung bedingt sind. Auf den ersten Bereich folgend fällt die Nachbarfläche in einem zweiten Bereich von der Absatzfläche weg mit einem Freigang ab, bis hin zu einem Trennbereich, insbesondere bis hin zur Werkzeugtrennung.

In dem Trennbereich und bevorzugt an dessen äußeren Ende, zum Freigang hin, verläuft gemäß einer bevorzugten Ausführungsform die Werkzeugtrennung. Dort ist ein innerer Abstand zwischen der Absatzfläche und der Nachbarfläche sicher eingehalten.

Durch die Verlegung der Werkzeugtrennung nach innen entsteht bei Kontakt zwischen Außenverkleidungsteil und Blechteil keine Scheuerstelle.

Die bei bekannten Stoßfängern, die ohne Zwischenschienen oder Schutzfolien meist mit Abstand zu einer Karosseriefläche an die Karosserie angebunden waren, oft außen, im Kontaktbereich der beiden kritischen Flächen angeordneten, aus Werkzeugtrennungen resultierenden Grate sind erfindungsgemäß nach innen versetzt und in einem größeren Abstand zum Blechteil angeordnet. Der Grat wird wegen der erfindungsgemäßen Geometrie des Außenverkleidungsbauteils den Lack eher nicht verletzen. Die störende Werkzeugtrennung, bzw. der resultierende Grat, wird nunmehr einem Kontakt zum negativen Seitenwandrahmen entzogen. Die Erfindung beinhaltet eine mit den oben genannten erfindungsgemäßen Merkmalen ausgeführte Folie oder Abdeckung für ein Außenverkleidungsbauteil.

Gemäß einer vorteilhaften Ausführungsform eines erfindungsgemäßen Außenverkleidungsbauteils ist kein äußerer Abstand in dem ersten Bereich zwischen der Absatzfläche und der Nachbarfläche vorgesehen. Die Erfindung ermöglicht somit eine Ausbildung einer Nullfuge.

Gemäß einer weiteren vorteilhaften Ausführungsform eines erfindungsgemäßen Außenverkleidungsbauteils hat der Freigang eine Neigung von bevorzugt und ggf. abschnittsweise etwa 7° in Bezug zu einem Koordinatensystem bzw. Netz des Kraftfahrzeugs.

Gemäß einer weiteren vorteilhaften Ausführungsform eines erfindungsgemäßen Außenverkleidungsbauteils ist auf den Trennbereich folgend zur Innenseite hin eine Nocke angeordnet, die sich bevorzugt an die Absatzfläche anschmiegt. Eine definierte Nullfuge zwischen Stoßfänger und Seitenwandrahmen ist damit über eine ausreichende Abschnittslänge in dem ersten Bereich hinweg stabilisiert.

Gemäß einer weiteren vorteilhaften Ausführungsform eines erfindungsgemäßen Außenverkleidungsbauteils geht die Nocke mit abgerundeten Flanken in einen zur Absatzfläche parallelen Nockenbereich über.

Gemäß einer weiteren vorteilhaften Ausführungsform eines erfindungsgemäßen Außenverkleidungsbauteils erfolgt in einem inneren Endbereich die Anbindung an die Karosserie, insbesondere mittels eines durch ein Durchgangsloch hindurchtretenden Befestigungselements.

Gemäß einer weiteren vorteilhaften Ausführungsform eines erfindungsgemäßen Außenverkleidungsbauteils ist eine zum Schenkel hin verlaufende Außenwand dem Schenkel zugewandt zumindest partiell ausgedünnt ausgebildet.

Nachfolgend wird die Erfindung anhand schematischer Darstellungen näher erläutert. Es zeigen
- Fig. 1: ein erfindungsgemäßes Außenverkleidungsbauteil, ausschnittsweise und als Konturverlauf gezeichnet, mit Nocke,
- Fig. 2: einen Schnitt A-A durch das Außenverkleidungsbauteil aus Fig. 1 zur Verdeutlichung der Wanddickenverläufe,
- Fig. 3: eine perspektivische Ansicht von innen auf einen oberen Abschnitt des Außenverkleidungsbauteils aus Fig. 1 mit eingetragenem Schnitt A-A und
- Fig. 4: die perspektivische Ansicht gem. Fig. 3 auf einen unteren Abschnitt.

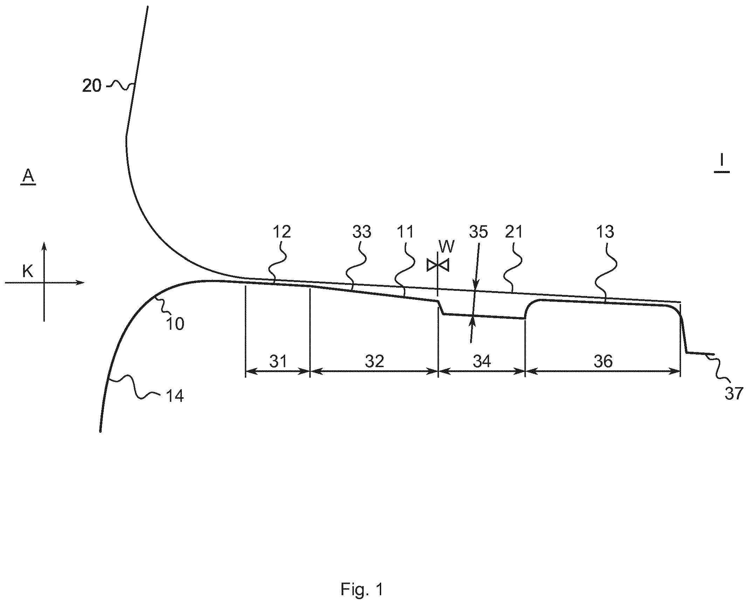

In Fig. 1 ist ein erfindungsgemäßes Außenverkleidungsbauteil 10 eines Kraftfahrzeugs mit einem Koordinatensystem K dargestellt, das als sogenanntes Netz meist für das gesamte Kraftfahrzeug gilt. Eine in Fig. 1 eingezeichnete Werkzeugtrennlinie W verdeutlicht, dass die der Erfindung zugrundeliegende Gratproblematik weiter innen I gelöst wird, als bei bekannten Außenverkleidungsbauteilen solcher Art.

Von einer außen A verlaufenden Außenwand 14 des Außenverkleidungsbauteils 10, insbesondere eines Stoßfängers, nach innen I gesehen, verlaufen gemäß Figur 1 zunächst in einem ersten Bereich 31 eine Absatzfläche 21 der Karosserie 20 und eine Nachbarfläche 12 eines nach innen abgestellten Schenkels 11 des Verkleidungsbauteils 10 in konstanter Breite aneinander anliegend und damit parallel zueinander. Sollte in der Darstellung gem. Fig. 1 ein infinitesimaler Abstand zwischen den Flächen 12, 21 erkennbar sein, soll das lediglich die Ausbildung und die Grenzen der sich begegnenden Oberflächen verdeutlichen. Tatsächlich dient die Erfindung der Ausbildung einer Nullfuge zwischen der Absatzfläche 21 und der Nachbarfläche 12. Im Bereich 31 kommt es erfindungsgemäß zu einer Anlage konstanter Breite.

An den ersten Bereich 31 angrenzend folgt über einen zweiten Bereich 32 hinweg eine Fugenaufweitung durch Ausbildung eines gegenüber der Absatzfläche 21 abfallend ausgeführten Freigangs 33 in einen Trennbereich 34, in dem oder an dessen Anfang die erfindungsgemäße Werkzeugtrennung W vorgesehen ist. Die Werkzeugtrennung W ist demnach erfindungsgemäß in einem Endbereich des Freigangs 33 oder darauf folgend angeordnet. Dort hält die Nachbarfläche 12 einen inneren Abstand 35 von der Absatzfläche 21.

In der Nachbarfläche 12 auf den Freigang 33 folgend ist eine Vertiefung als Trennbereich 34 ausgeführt. In dem Trennbereich 34 ist der innere Abstand 35 gesichert, um keine Beschädigungen durch einen Grad zuzulassen.

Gemäß einer besonders bevorzugten Ausführungsform ist innen benachbart zu dem Trennbereich 34 ein Nockenbereich 36 vorgesehen. Dort tritt die Nachbarfläche 12 mit einer Nocke 13 der Absatzfläche 21 entgegen.

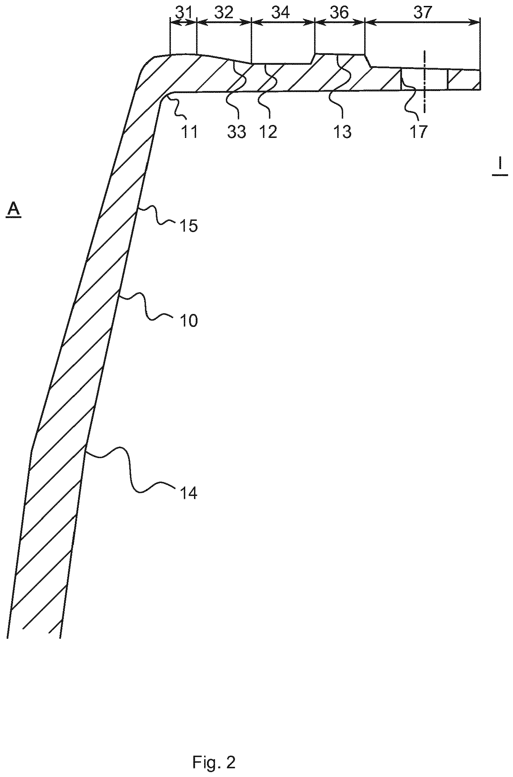

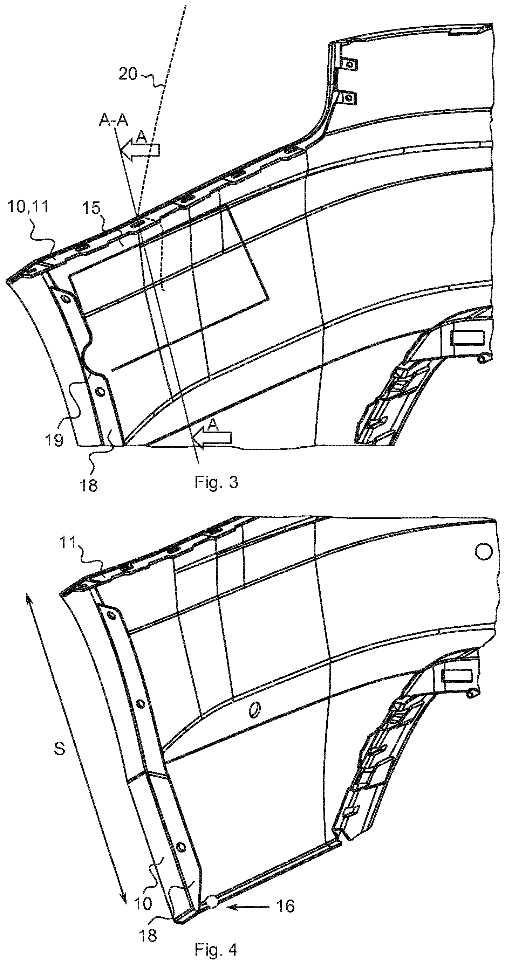

Fig. 2 verdeutlicht als Schnitt A-A (in Fig. 3 eingetragen) die Wanddickenverläufe eines erfindungsgemäßen Außenverkleidungsbauteils 10. Ein Außenwandverlauf beginnt oben in der L-förmigen Anschluss an den eher horizontalen Schenkel 11 und endet weiter unten in einem leichten Knick oder Drehpunkt auf Sollwandstärke. Die Außenwand 14 ist gemäß der Darstellung in Figur 2 vorteilhaft zu dem Schenkel 11 hin, kontinuierlich schlanker werdend, ausgebildet. Von unten gesehen, kann von einer auf den Drehpunkt folgenden Ausdünnung 15 gesprochen werden. Da erleichtert in erfindungsgemäßen Fertigungsverfahren das Ausformen des Formteils.

Auf der Innenseite I endet der Schenkel 11 in einem inneren Endbereich 37 mit beabstandet zueinander angeordneten Durchgangslöchern 17. Die Durchgangslöcher 17 sind für Befestigungselemente (nicht dargestellt) vorgesehen, welche zum Anbinden an die Karosserie 20 dienen.

In den Figuren 3 und 4 sind Ausschnitte einer perspektivischen Innenansicht auf das Außenverkleidungsbauteil 10 dargestellt. Das obere Ende ist in Figur 3 vergrößert dargestellt und zum Vergleich ein Oberflächenverlauf der Karosserie 20 eingetragen. Die Ausdünnung 15 ist mit ihrem unteren Ende in einem Drehpunkt skizziert. Im Drehpunkt der Wandverdünnung wird gemäß einer vorteilhaften Ausführungsform der Radlaufflansch eines Kraftfahrzeugs ausgespart 19. Dazu ist ein nach innen I von der Außenwand 14 abstehender T-Schenkel 18 partiell zurückgenommen. Die Aussparung 19 wird nach der Montage von einer Radlaufschale abgedeckt (nicht dargestellt).

In Fig. 4 ist weiter unten auf der Innenseite I der Außenwand 14 ein Haltepunkt 16 skizziert. Mittels des Haltepunkts 16 wird das Außenverkleidungsbauteil 10, insbesondere ein Stoßfänger, bei der Entformung an der Unterseite festgehalten, um Materialschwund in Schwindungsrichtung S zu beeinflussen. Das Schrumpfen erfolgt als Ergebnis der dargestellten vorteilhaften Ausführungsform (Fig. 4) einseitig nach unten.

### Bezugszeichen

- 10: Außenverkleidungsbauteil
- 11: Schenkel
- 12: Nachbarfläche
- 13: Nocke
- 14: Außenwand
- 15: Ausdünnung
- 16: Haltepunkt
- 17: Durchgangsloch
- 18: T-Schenkel
- 19: Aussparung

- 20: Karosserie
- 21: Absatzfläche

- 31: erster Bereich
- 32: zweiter Bereich
- 33: Freigang
- 34: Trennbereich
- 35: innerer Abstand
- 36: Nockenbereich
- 37: innerer Endbereich

- A: Außenseite
- I: Innenseite
- K: Koordinatensystem Fahrzeug
- W: Werkzeugtrennung
- S: Schwindungsrichtung

## Patentansprüche

1. Außenverkleidungsbauteil (10) eines Kraftfahrzeugs, insbesondere Stoßfänger zur Anbindung an ein Blech der Außenverkleidung eines Kraftfahrzeugs, dessen Karosserie (20) eine Absatzfläche (21) für die Anbindung des Außenverkleidungsbauteils aufweist, wobei die Absatzfläche (21) von der Außenseite (A) des Kraftfahrzeugs nach innen (I) verläuft und ein ebenfalls nach innen (I) abgestellter Schenkel (11) des Außenverkleidungsbauteils (10) grob in paralleler Richtung zur Absatzfläche (21) verläuft, **dadurch gekennzeichnet dass** die Absatzfläche (21) und eine der Absatzfläche (21) zugewandte Nachbarfläche (12) des Schenkels (11) aneinander anliegend und in einem, aus Sicht auf einen Schnitt durch das Kraftfahrzeug, von außen (A) nach innen (I) reichenden, ersten Bereich (31) nahezu parallel zueinander verlaufen, und dass
1.1 von außen (A) bis zumindest zum inneren Ende des ersten Bereichs (31) die Nachbarfläche (12) frei von Graten ist, die beispielsweise durch eine Werkzeugtrennung (W) bedingt sind, und dass
1.2 die Nachbarfläche (12) auf den ersten Bereich (31) folgend, in einem zweiten Bereich (32), einen wachsenden Abstand zu der Absatzfläche (21) einnehmend, mit einem Freigang (33) abfällt, bis hin zu einem Trennbereich (34) .

2. Außenverkleidungsbauteil (10) nach Anspruch 1,
**dadurch gekennzeichnet, dass** auf den eine Freigangstasche ausbildenden Trennbereich (34) folgend zur Innenseite (I) hin eine Nocke (13) als Abstimmnocke angeordnet ist, die auf Anlage zur Absatzfläche (21) ausgeführt ist.

3. Außenverkleidungsbauteil (10) nach Anspruch 2,
**dadurch gekennzeichnet, dass** die Abstimmnocke (13) mit abgerundeten Flanken in einen zur Absatzfläche (21) parallelen Nockenbereich (36) übergeht, der sich bevorzugt über etwa 2 mm erstreckt.

4. Außenverkleidungsbauteil (10) nach einem der vorangehenden Ansprüche,
**dadurch gekennzeichnet, dass** die Werkzeugtrennung in dem Trennbereich (34) verläuft, insbesondere direkt am Ende des Freigangs (33) und ein innerer Abstand (35) zwischen der Absatzfläche (21) und der Nachbarfläche (12) eingehalten ist.

5. Außenverkleidungsbauteil (10) nach einem der vorangehenden Ansprüche,
**dadurch gekennzeichnet, dass** sich der erste Bereich (31) über etwa 2 mm erstreckt.

6. Außenverkleidungsbauteil (10) nach einem der vorangehenden Ansprüche,
**dadurch gekennzeichnet, dass** die Nachbarfläche (12) der Absatzfläche (21) angepasst in dem ersten Bereich (31) für eine Anlage an der Absatzfläche (21) und damit zur zumindest abschnittsweisen Ausbildung einer Nullfuge zwischen den Nachbarfläche (12) und der Absatzfläche (21) bestimmt sind.

7. Außenverkleidungsbauteil (10) nach einem der vorangehenden Ansprüche,
**dadurch gekennzeichnet, dass** die Nachbarfläche (12) wie auch Absatzfläche (21) in dem ersten Bereich (31), zumindest abschnittsweise, eine Neigung von etwa 3° in Bezug zu einer Achse eines Koordinatensystems (K) des Fahrzeugs aufweisen.

8. Außenverkleidungsbauteil (10) nach einem der vorangehenden Ansprüche,
**dadurch gekennzeichnet, dass** der Freigang (33) eine Neigung von zumindest abschnittsweise 7° in Bezug zur Absatzfläche (21) aufweist.

9. Außenverkleidungsbauteil (10) nach einem der vorangehenden Ansprüche,
**dadurch gekennzeichnet, dass** in einem innersten Bereich (37) die Anbindung an die Karosserie (20) erfolgt, insbesondere mittels eines durch ein Durchgangsloch (17) hindurchtretenden Befestigungselements.

10. Außenverkleidungsbauteil (10) nach einem der vorangehenden Ansprüche,
**dadurch gekennzeichnet, dass** eine zum Schenkel (11) hin verlaufende Außenwand (14) zum Schenkel (11) hin zumindest partiell ausgedünnt (15) ausgebildet ist.

11. Außenverkleidungsbauteil (10) nach einem der vorangehenden Ansprüche,
**dadurch gekennzeichnet, dass** eine zum Schenkel (11) hin verlaufende Außenwand (14) dem Schenkel (11) abgewandt einen Haltepunkt (16) aufweist.

## Claims

1. Outer panelling component (10) of a motor vehicle, in particular a bumper for attachment to a metal sheet of the outer panelling of a motor vehicle, the body shell (20) of which has a mounting surface (21) for attaching the outer panelling component, wherein the mounting surface (21) runs from the outer side (A) of the motor vehicle to the interior (I), and a leg (11) of the outer panelling component (10), which is also turned towards the interior (I), runs in a roughly parallel direction relative to the mounting surface (21), **characterised in that** the mounting surface (21) and an adjacent surface (12) of the leg (11) facing towards the mounting surface (21), abutting one another, run virtually parallel to each other in a first region (31) that extends, when viewed as a cross-section through the motor vehicle, from the exterior (A) to the interior (I), and that
1.1 from the exterior (A) to at least the inner end of the first region (31), the adjacent surface (12) is free from burrs that are, for example, caused by tool separation (W), and that
1.2 following the first region (31), the adjacent surface (12), assuming an increasing distance from the mounting surface (21) in a second region (32), runs downwards with clearance (33) to a separation region (34).

2. Outer panelling component (10) according to claim 1, **characterised in that**, following the separation region (34) that forms a clearance zone to the interior (I), a cam (13) is arranged as an adjustment cam which is designed for attachment to the mounting surface (21).

3. Outer panelling component (10) according to claim 2, **characterised in that** the adjustment cam (13) with rounded-off edges passes into a cam region (36) parallel to the mounting surface (21), said cam region preferably extending over approximately 2 mm.

4. Outer panelling component (10) according to one of the preceding claims, **characterised in that** the tool separation takes place in the separation region (34), in particular directly, on the end of the clearance zone (33) and an inner distance (35) between the mounting surface (21) and the adjacent surface (12) is adhered to.

5. Outer panelling component (10) according to one of the preceding claims, **characterised in that** the first region (31) extends over approximately 2 mm.

6. Outer panelling component (10) according to one of the preceding claims, **characterised in that** the adjacent surface (12) to the mounting surface (21) is adapted in the first region (31) for attachment to the mounting surface (21) and is therefore determined for the at least sectional formation of a zero joint between the adjacent surface (12) and the mounting surface (21).

7. Outer panelling component (10) according to one of the preceding claims, **characterised in that** the adjacent surface (12) and the mounting surface (21) have, in the first region (31), at least sectionally, an inclination of approximately 3° relative to an axis of a coordinate system (K) of the vehicle.

8. Outer panelling component (10) according to one of the preceding claims, **characterised in that** the clearance zone (33) has an inclination of, at least sectionally, 7° relative to the mounting surface (21).

9. Outer panelling component (10) according to one of the preceding claims, **characterised in that** in an innermost region (37), the connection to the body shell (20) takes place in particular by means of a fastening element that passes through a through hole (17).

10. Outer panelling component (10) according to one of the preceding claims, **characterised in that** an outer wall (14) running towards the leg (11) is designed with at least partial tapering (15) towards the leg (11).

11. Outer panelling component (10) according to one of the preceding claims, **characterised in that** an outer wall (14) running towards the leg (11) has a stopping point (16) turned away from the leg (11).

## Revendications

1. Elément d'habillage externe (10) d'un véhicule, en particulier pare chocs destiné à être connecté à une tôle de l'habillage externe d'un véhicule dont la carrosserie (20) comporte une surface de talon (21) permettant la connexion de l'élément d'habillage externe, la surface de talon (21) s'étendant vers l'intérieur (I) à partir de la face externe (A) du véhicule, et une branche (11) de l'élément d'habillage externe (10) également orientée vers l'intérieur (I) s'étendant approximativement dans une direction parallèle à la surface de talon (21),
**caractérisé en ce que**
la surface de talon (21) et une surface voisine (12) de la branche (11) tournée vers cette surface de talon (21) s'étendent essentiellement parallèlement en étant appliquées l'une sur l'autre, dans une première zone (31) dirigée de l'extérieur (A) vers l'intérieur (I) en vue sur une coupe au travers du véhicule, et
1.1 de l'extérieur externe (A) jusqu'au moins l'extrémité interne de la première zone (31), la surface voisine (12) est exempte de crêtes conditionnées par exemple par la séparation d'un outil (W), et
1.2 la surface voisine (12) chute, dans une seconde zone (32) suivant la première zone (31) située à une distance croissante de la surface de talon (21) avec un dégagement (33) jusqu'à une zone de séparation (34).

2. Elément d'habillage externe (10) conforme à la revendication 1, **caractérisé en ce qu'**
à la suite de la zone de séparation (34) formant une poche de dégagement vers le côté interne (I) est positionnée une came (13) constituant une came d'adaptation qui est réalisée pour venir en appui sur la surface de talon (21).

3. Elément d'habillage externe (10) conforme à la revendication 2, **caractérisé en ce que**
la came d'adaptation (13) se prolonge, avec des flancs arrondis dans une zone de came (36) parallèle à la surface de talon (21) qui s'étend de préférence sur environ 2 mm.

4. Elément d'habillage externe (10) conforme à l'une des revendications précédentes,
**caractérisé en ce que**
la séparation d'outils s'étend dans la zone de séparation (34), en particulier directement à l'extrémité du dégagement (33), et la distance interne (35) entre la surface de talon (21) et la surface voisine (12) est maintenue.

5. Elément d'habillage externe (10) conforme à l'une des revendications précédentes,
**caractérisé en ce que**
la première zone (31) s'étend sur environ 2 mm.

6. Elément d'habillage externe (10) conforme à l'une des revendications précédentes,
**caractérisé en ce que**
la surface voisine (12) est adaptée à la surface de talon (21) dans la première zone (31) pour tenir en appui sur cette surface de talon (21) et ainsi pour former au moins par segments un joint invisible entre la surface voisine (12) et la surface de talon (21).

7. Elément d'habillage externe (10) conforme à l'une des revendications précédentes,
**caractérisé en ce que**
la surface voisine (12) et également la surface de talon (21) comportent, dans la première zone (31) au moins par segments une inclinaison d'environ 3° par rapport à un axe d'un système de coordonnées (K) du véhicule.

8. Elément d'habillage externe (10) conforme à l'une des revendications précédentes,
**caractérisé en ce que**
le dégagement (33) comporte une inclinaison au moins par segments de 7° par rapport à la surface de talon (21).

9. Elément d'habillage externe (10) conforme à l'une des revendications précédentes,
**caractérisé en ce que**
dans la zone la plus interne (37) la connexion à la carrosserie (20) s'effectue en particulier au moyen d'un élément de fixation passant au travers d'un perçage traversant (17).

10. Elément d'habillage externe (10) conforme à l'une des revendications précédentes,
**caractérisé en ce que**
la paroi externe (14) s'étendant vers la branche (11) est au moins partiellement amincie vers la branche (11).

11. Elément d'habillage externe (10) conforme à l'une des revendications précédentes,
**caractérisé en ce que**
la paroi externe (14) s'étendant vers la branche (11) comporte un point de maintien (16) situé à l'opposé de la branche (11).
